# EUROPÄISCHE PATENTANMELDUNG

(11) **EP 2 559 716 A1**
(43) Veröffentlichungstag der Anmeldung: **20.02.2013**
(21) Anmeldenummer: 11177534.2
(22) Anmeldetag: 15.08.2011
(51) Int. Cl.: C08G 18/10, C08G 18/32, C08G 18/76

(54) **Polyurethangießharz**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft Polyurethangießharzsystem, enthaltend (a) ein Isocyanatprepolymere mit einem NCO-Gehalt von mindestens 7 Gew.-%, erhältlich durch Umsetzung von Isocyanat (a1), enthaltend 2,4' MDI und 4,4'-MDI, und Polyol (a2), und (b) eine Stoffmischung, enthaltend mindestens ein Polyol 2 (b1) und mindestens ein Diamin (b2), wobei das Diamin (b2) einen Schmelzpunkt von mindestens 80 °C aufweist, sowie gegebenenfalls weiteren Polyolen (c) und gegebenenfalls Hilfs- und Zusatzstoffen (d). Weiter betrifft die vorliegende Erfindung ein Verfahren zur Herstellung von Gießelastomeren unter Einsatz des Polyurethangießharzsystems sowie ein Polyurethangießelastomer, erhältlich nach einem solchen Verfahren.

## Beschreibung

Die vorliegende Erfindung betrifft Polyurethangießharzsystem, enthaltend (a) ein Isocyanatprepolymere mit einem NCO-Gehalt von mindestens 7 Gew.-%, erhältlich durch Umsetzung von Isocyanat (a1), enthaltend 2,4' MDI und 4,4'-MDI, und Polyol (a2), und (b) eine Stoffmischung, enthaltend mindestens ein Polyol 2 (b1) und mindestens ein Diamin (b2), wobei das Diamin (b2) einen Schmelzpunkt von mindestens 80°C aufweist, sowie gegebenenfalls weiteren Polyolen (c) und gegebenenfalls Hilfs- und Zusatzstoffen (d). Weiter betrifft die vorliegende Erfindung ein Verfahren zur Herstellung von Gießelastomeren unter Einsatz des Polyurethangießharzsystems sowie ein Polyurethangießelastomer, erhältlich nach einem solchen Verfahren.

Polyurethangießharze sind lange bekannt und beispielsweise im "Kunststoffhandbuch, Band 7, Polyurethane", Carl Hanser Verlag, 2. Auflage 1983, Kapitel 8.1 beschrieben. Dabei wird je nach Verarbeitungsmethode zwischen heißhärtenden und kalthärtenden Gießelastomeren unterschieden. Dabei werden bei den kalthärtenden Systemen vernetzte Polyole eingesetzt, wodurch im Gießelastomer ein weitmaschiges Netzwerk entsteht. Dagegen werden bei den klassischen heißhärtenden Systemen im Wesentlichen nur lineare Einsatzstoffe verwendet, weisen also im Endzustand kein Netzwerk durch chemische Bindung auf. Ihre Verfestigung erfolgt durch Kettenverlängerung, insbesondere mit aromatischen Diaminen. Auf diese Weise entstehen im Vergleich zur Matrix relativ starre Konfigurationen, die physikalisch als Hartsegmente segregieren. Dabei sind die mechanischen Eigenschaften der aufwendiger herstellbaren Heißgießharze deutlich besser als die mechanischen Eigenschaften der Kaltgießharze.

DE102006004527 beschreibt ein Heißgießsystem aus NCO-Funktionalisierten Prepolymeren und aminischen Kettenverlängerern und Vernetzern. Dabei werden NCO-Prepolymere mit einem 2,4'-MDI-Gehalt von mindestens 80 Gew.-% beschrieben. In den Beispielen werden Prepolymere mit einen NCO-Gehalt von ca. 3,4 % eingesetzt. Der aminische Kettenverlängerer wird in geschmolzener Form bei Temperaturen von typischerweise etwa 5 °C über dem Schmelzpunkt des Kettenverlängerers mit dem Isocyanatprepolymer vermischt. Gemäß DE102006004527 führt der Einsatz der beschriebenen Prepolymere zu einer verlängerten Gießzeit und verbesserten mechanischen Eigenschaften.

W02009118112 beschreibt den Einsatz von 2,2'-MDI bei der Herstellung von Isocyanatprepolymeren für Polyisocyaant-Polyadditions-Produkte. Sollen Polyurethangießelastomere hergestellt werden, werden diese Isocyanatmischungen mit Kettenverlängerern, beispielsweise hochreaktiven Aminen mindestens 5°C, meist 10 bis 20°C oberhalb des Schmelzpunktes der Amine umgesetzt.

Dabei ist das Heißgießverfahren insbesondere aufgrund der erforderlichen hohen Temperaturen von üblicherweise mehr als 100°C sehr aufwendig.

Aufgabe der vorliegenden Erfindung war es daher ein einfacheres Verfahren zur Herstellung von Polyurethangießharzen zu liefern, die mindestens gleich gute mechanische Eigenschaften wie übliche Polyurethanheißgießharze aufweisen.

Diese Aufgabe wird durch ein Verfahren zur Herstellung von Polyurethangießharzen, bei dem man mindestens ein Isocyanatprepolymer (a) mit einem NCO-Gehalt von mindestens 7 Gew.- %, erhältlich durch Umsetzung von Isocyanat (a1), enthaltend 2,4' MDI und 4,4'-MDI, und Polyol (a2), mit mindestens einer Stoffmischung (b), enthaltend mindestens ein Polyol (b1) und mindestens ein Diamin (b2) sowie gegebenenfalls weiteren Polyolen (c) und gegebenenfalls Hilfs-und Zusatzstoffen (c) zu einer Reaktionsmischung vermischt und diese zum Polyurethangießharz ausreagieren lässt, wobei das Diamin (a2) einen Schmelzpunkt von mindestens 80 °C aufweist.

Weiter ist Gegenstand der vorliegenden Erfindung ein Polyurethangießharzsystem, enthaltend (a) ein Isocyanatprepolymere mit einem NCO-Gehalt von mindestens 12 Gew.-%, erhältlich durch Umsetzung von Isocyanat (a1), enthaltend 2,4' MDI und 4,4'-MDI, und Polyol (a2), und (b) eine Stoffmischung, enthaltend mindestens ein Polyol 2 (b1) und mindestens ein Diamin (b2), wobei das Diamin (b2) einen Schmelzpunkt von mindestens 80 °C aufweist, sowie gegebenenfalls weiteren Polyolen (c) und gegebenenfalls Hilfs- und Zusatzstoffen (d).

Polyurethangießharze sind üblicherweise kompakte Polyurethane. Dabei bedeutet kompakt, dass die Dichte der Polyurethangießharze üblicherweise 800 bis 1500 g/L, vorzugsweise 900 bis 1400 g/L und insbesondere 1000 bis 1300 g/L beträgt.

Zur Herstellung der Polyisocyanate (a) werden 2,4' MDI und 4,4'-MDI, eingesetzt. Darüber hinaus können weitere, übliche Isocyanate, vorzugsweise aromatische Diisocyanate, insbesondere Toluylendiisocyanat, monomeres DiphenylmethandüsocyanatDiphenylmethandüsocyanat, wie 2,2' MDI oder höherkernige Homologe des Diphenylmethandiisocyanats, das Polymer-MDI, sowie Mischungen dieser Diisocyanate, vorzugsweise Diphenylmethandiisocyanat, eingesetzt werden. Diphenylmethandiisocyanat kann auch als Mischung mit seinen Derivaten eingesetzt werden. Dabei kann Diphenylmethandiisocyanat besonders bevorzugt bis 10 Gew.-%, weiter besonders bevorzugt bis zu 5 Gew.-%, carbodiimid-, uretdion-, allophanat- oder uretoniminmodifiziertes Diphenylmethandiisocyanat, insbesondere carbodiimid modifiziertes Diphenylmethandiisocyanat, enthalten.Vorzugsweise werden neben 2,4' MDI und 4,4'-MDI nur difunktionelle Isocyanate eingesetzt. Vorzugsweise ist der Anteil von 2,4' MDI und 4,4'-MDI an den Isocyanate a) größer als 60 Gew.-%, besonders bevorzugt größer als 80 Gew.-% und insbesondere größer als 98 Gew.-%. Dabei beträgt das Gewichtsverhältnis von 2,4' MDI zu 4,4'-MDI vorzugsweise 10 zu 90 bis 90 zu 10, besonders bevorzugt 30 zu 70 bis 70 zu 30 und insbesondere 40 zu 60 bis 60 zu 40.

Als Polyol (a2) werden übliche in der Polyurethanchemie bekannte Polyole eingesetzt. Polyole (a2) haben ein zahlenmittleres Molekulargewicht von größer 400 g/mol, vorzugsweise größer 550 g/mol, und können beispielsweise Polyetherole, Polyesterole oder Polycarbonatole sein, wobei die mittlere Funktionalität der Polyole vorzugsweise kleiner als 3 bis 1,7, besonders bevorzugt kleiner als 2,5 bis 1,9 und insbesondere kleiner als 2,1 bis 1,9 ist.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 gegenüber Isocyanatgruppen reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startermolekül kommen Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan, vorzugsweise Ethylenglykol, 1,2- und 1,3-Propandiol, Diethylenglykol, Dipropylenglykol, Tripropylenglykol und 1,4-Butandiol in Betracht.

Die Polyetherpolyole, vorzugsweise Polyoxypropylen-polyoxyethylen-polyole, besitzen eine mittlere Funktionalität von 1,7 bis 3, besonders bevorzugt von 1,8 bis 2,5 und insbesondere von 1,9 bis 2,1 und Molekulargewichte von vorzugsweise 1.000 bis 12.000 g/mol, besonders bevorzugt von 1.400 bis 8.000 g/mol und insbesondere von 1.700 bis 6.000 g/mol. Vorzugsweise werden als Polyetherpolyole solche eingesetzt, die durch DMC-Katalyse, ausgehend von einem difunktionellen Starter, hergestellt wurden.

Als Polyetherpolyole wird besonders bevorzugt Polytetrahydofuran eingesetzt. Dabei beträgt die Funktionalität üblicherweise von 1,8 bis 3, bevorzugt von 1,9 bis 2,2 und besonders bevorzugt 1.95 bis 2,1 und das zahlenmittleren Molekulargewicht üblicherweise 500 bis 5000 g/mol, bevorzugt 750 bis 4000 g/mol, besonders bevorzugt 800 bis 2500 g/mol und insbesondere von 1500 bis 2200 g/mol.

Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird das Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 :1,05 bis 1,2 polykondensiert.

Die erhaltenen Polyesterpolyole besitzen vorzugsweise eine Funktionalität von 1,8 bis 3, besonders bevorzugt von 1,9 bis 2,5 und insbesondere von 1,95 bis 2,1 und ein Molekulargewicht von 480 bis 5000, vorzugsweise 1000 bis 4500 g/mol und insbesondere 1600 bis 4500.

Dabei ist der Anteil an höhermolekularen Verbindungen mit genau zwei gegenüber Isocyanatgruppen reaktiven Gruppen, sogenannte Diole, bezogen auf das Gesamtgewicht der polymere Verbindungen mit gegenüber Isocyanaten reaktiven Gruppen b) größer 50 Gew.-%, besonders bevorzugt größer 80 Gew.-% und insbesondere 100 Gew.-%.

Vorzugsweise werden als Polyole 1 (a2) Polyole, enthaltend Polytetrahydrofuran oder Polyole, enthaltend Polyester eingesetzt. Besonders bevorzugt bestehen die Polyole 1 aus Polytetrahydrofuran oder aus einem oder mehreren Polyestern.

Gegebenenfalls können der Umsetzung zum Polyisocyanatprepolymer noch Kettenverlängerungsmittel (a-3) zugegeben werden. Als Kettenverlängerungsmittel (a-3) für das Prepolymer sind zwei- oder dreiwertige Alkohole, beispielsweise Dipropylenglykol und/oder Tripropylenglykol, oder die Addukte von Dipropylenglykol und/oder Tripropylenglykol mit Alkylenoxiden, bevorzugt Dipropylenglycol, geeignet, vorzugsweise werden keine Kettenverlängerer (a3) zugegeben.

Zur Herstellung des Isocyanatprepolymers werden Isocyanat (a1), Polyol 1 (a2) und gegebenenfalls weitere Polyole, Kettenverlängerungsmittel und/oder Vernetzungsmittel vermischt. Dabei geschieht dies in einem Verhältnis, dass der NCO-Gehalt des Prepolymers mindestens 7 Gew.-%, vorzugsweise mindestens 8 Gew.-% und maximal 33 Gew.-%, besonders bevorzugt 12 bis 32 Gew.-%, weiter bevorzugt 14 bis 25 Gew.-% und insbesondere 15 bis 22 Gew.-% beträgt. Dabei beträgt der Anteil des eingesetzten Diphenylmethandiisocyanats (a1) vorzugsweise 75 bis 99 Gew.-%, des Polyols 1 (a2) vorzugsweise 1 bis 10 Gew.-% und des Polyols 2 0 bis 15 Gew.-%. Bevorzugt wird die Mischung auf Temperaturen von 30 bis 100 °C, besonders bevorzugt 50 bis 90 °C und insbesondere etwa 80 °C erwärmt.

Die Stoffmischungen (b) enthalten mindestens ein Polyol 2 (b1) und mindestens ein Diamin (b2). Als Polyole 2 (b1) können dabei alle unter (a2) beschriebenen Polyole eingesetzt werden. Dabei können Polyole 1 und 2 gleich oder verschieden sein. Vorzugsweise werden als Polyol 2 Polyole, enthaltend Polytetrahydrofuran oder Polyole, enthaltend Polyester eingesetzt. Besonders bevorzugt bestehen die Polyole 1 aus Polytetrahydrofuran oder aus einem oder mehreren Polyestern. Insbesondere wird als Polyol 2 Polytetrahydrofuran mit einer Funktionalität von üblicherweise von 1,8 bis 3, bevorzugt von 1,9 bis 2,2 und besonders bevorzugt 1.95 bis 2,1 und das zahlenmittleren Molekulargewicht üblicherweise 500 bis 5000 g/mol, bevorzugt 750 bis 4000 g/mol, besonders bevorzugt 800 bis 2500 g/mol und insbesondere von 1500 bis 2200 g/mol eingesetzt.

Als Diamine (b2) werden Diamine mit einem Schmelzpunkt von mindestens 80 °C, vorzugsweise mindestens 90 °C, eingesetzt. Diamine (b2) sind vorzugsweise Verbindungen, die mindestens eine NH₂-Gruppe aufweisen, die direkt an eine aromatische Gruppe, beispielsweise einen Phenylring, gebunden ist. Vorzugsweise sind beide NH₂-Gruppen des Diamins an ein aromatisches System gebunden. Diese Verbindungen haben zumeist ein Molekulargewicht im Bereich zwischen 150 und 500 g/mol. Vorzugsweise weist das Diamin (b2) mindestens einen elektronenziehenden Substituenten am Aminogruppe tragenden aromatischen System auf. Beispiele für Diamine (b2) sind 4,4'-Diamino-diphenylmethan, 3,3'-Dichloro-4,4'-diamino-diphenylmethan (MOCA), 4,4'-Diamino-5,5'-dimethyldiphenylmethan, 4,4'-Diamino-5,5'-diethyldiphenylmethan MDEA, 4,4'-Diamino-5,5'-diisopropyldiphenylmethan, 4,4'-Diamino-5-isopropyl-5'-methyl-diphenylmethan, 4,4'-Diamino-5-ethyl-5'-methyl-diphenylmethan, 3,5-Diamino-4-chloro-isobutylbenzoat, Trimethylenglykol-di-p-aminobenzoat (Versalink 740M) und 4,4'-Diamino-2,2'-dichloro-5,5'-diethyldiphenylmethan (MCDEA). Besonders bevorzugt sind MOCA, 3,5-Diamino-4-chloroisobutylbenzoat, MCDEA und Versalink 740M.

Dabei wird der Schmelzpunkt im Rahmen der Erfindung mit einer Aufheizrate von maximal 0,5 °C und einem Gehalt an gelösten Verunreinigungen von maximal 2 Gew.-% bestimmt.

Die Stoffmischungen (b) enthalten vorzugsweise 1 bis 50, besonders bevorzugt 5 bis 40 Gew.-% und insbesondere 15 bis 35 Gew.-% Diamin (b2) und vorzugsweise 50 bis 99 Gew.-%, besonders bevorzugt 70 bis 98 Gew.-% Polyol 2 (b1). Dabei liegt vorzugsweise eine Lösung der Polyole 2 und der Diamine vor.

Zur Herstellung der Stoffmischung aus Polyol 2 und Diamin werden Polyol 2 und Diamin vermischt und gegebenenfalls erwärmt, vorzugsweise auf Temperaturen von 30 bis 100, besonders bevorzugt 40 bis 90 °C und insbesondere 50 bis 80 °C. Gegebenenfalls kann die Stoffmischung auch noch verträglich machende Substanzen, wie oberflächenaktive Substanzen, enthalten. Beispiele für Oberflächenaktive Substanzen sind unter Hilfs- und Zusatzstoffen (d) genannt.

Vorzugsweise liegt die Stoffmischung (b) als stabile Lösung vor. Dabei wird unter einer stabilen Lösung eine Lösung verstanden, die beim Stehen bei Raumtemperatur mindestens eine Woche, vorzugsweise mindestens zwei Wochen und besonders bevorzugt mindestens 4 Wochen nicht makroskopisch in zwei Phasen separiert. Vorzugsweise handelt es sich um eine klare Lösung. Dabei bedeutet "klare Lösung", dass sich die Transmission der Lösung nach Auflösen des Diamins bei 80 °C und anschließendem Abkühlen auf Raumtemperatur bei 1 cm Schichtdicke um weniger als 50 % gegenüber dem reinen Polyol 2 ändert. Vorzugsweise wird unter einer klaren Lösung eine Lösung verstanden, die einen Formazin Trübungswert (Formazin Turbidity Unit = FTU) gemessen nach DIN ISO 15715:2003 von kleiner 200 FTU besitzt. Bevorzugt besitzt die Lösung ein FTU-Wert von kleiner 100 und besonders bevorzugt von kleiner 50 FTU.

Neben dem Isocyanatprepolymeren (a) und der Stoffmischung (b) können gegebenenfalls noch weitere Polyole 3 und gegebenenfalls Hilfs- und Zusatzstoffe enthalten sein. Dabei können als Polyole 3 alle oben beschriebenen Polyole 1 eingesetzt werden. Vorzugsweise sind die Polyole 2 und 3 gleich.

Die Hilfs- und Zusatzstoffe umfassen Katalysatoren, oberflächenaktive Substanzen, Schaumstabilisatoren, Zellregler, weitere Trennmittel, Füllstoffe, Farbstoffe, Pigmente, Hydrolyseschutzmittel, geruchsabsorbierende Substanzen und fungistatische und/oder bakteriostatisch wirkende Substanzen.

Als Katalysatoren können Verbindungen verwendet werden, welche die Reaktion der gegenüber Isocyanaten reaktiven Verbindungen (b) mit den Isocyanatprepolymeren (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyldiethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Vorzugsweise werden zur Herstellung der erfindungsgemäßen Polyurethangießharze keine Katalysatoren eingesetzt.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente b), eingesetzt.

Als geeignete weitere Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart. Vorzugsweise enthalten erfindungsgemäße Reaktionsmischungen keine weiteren Trennmittel.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat und Glasfasern. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.- %, vorzugsweise 1 bis 40 Gew.-%, bezogen auf das Gewicht der Komponenten (a) bis (d), zugegeben.

Zur Herstellung der erfindungsgemäßen Polyurethangießharze werden die Komponenten des Polyurethangießharzsystems, vorzugsweise bei Temperaturen von 30 bis 90 °C besonders bevorzugt 40 bis 80 °C, mehr bevorzugt 45 bis 70 °C und insbesondere bei 50 bis 60 °C vermischt. Diese Mischung wird dann, vorzugsweise in einer Form, zum Polyurethangießharz ausgehärtet. Die Formtemperaturen betragen üblicherweise 0 bis 130 °C, bevorzugt 60 bis 120 °C und besonders bevorzugt bei 80 bis 110 °C. Üblicherweise erfolgt das Vermischen der Komponenten in Niederdruckmaschinen. Die fertigen Polyurethangießharze können zur weiteren Verbesserung der mechanischen Eigenschaften nach dem Entformen bei erhöhten Temperaturen, beispielsweise 50 bis 120 °C, vorzugsweise 60 bis 110 °C und insbesondere 80 bis 100 °C und einen Zeitraum von üblicherweise 10 bis 24 Stunden nachgetempert werden.

Werden eine Stoffmischung (b) und weitere Polyole (c) eingesetzt kann durch Variation der Mengen von Stoffmischung (b) und Polyol (c) bei gleichem Isocyanatindex der Anteil an Diamin ((b2) variiert werden. So können nur durch Variation der Mengen der Stoffmischung (b) und des Polyols (c) auf einer Anlage ohne weitere Reinigung Polyurethangießharze mit unterschiedlichen Härten hergestellt werden. Beispielsweise können erfindungsgemäße Polyurethangießharze in Härten von 50 shore A bis 70 shore D hergestellt werden.

Weiter weisen die erfindungsgemäßen Polyurethangießharze hervorragende mechanische Eigenschaften auf, insbesondere die Werte für Zugfestigkeit, Reißdehnung, Weiterreißfestigkeit und Abrieb sind hervorragend und auch gegenüber dem konventionellen Verfahren unter direkter Zugabe des geschmolzenen Kettenverlängerers zum Prepolymer verbessert.

Auch weist das erfindungsgemäße Verfahren Vorteile gegenüber dem klassischen Verfahren zur Herstellung von Gießharzen auf. Insbesondere ist die Lagerung und Vorbereitung von den Komponenten viel einfacher, da kein oder nur ein kurzes Vorheizen der Prepolymere erforderlich ist. Auch ist der Schmelzpunkt von üblicherweise bei Raumtemperatur festen Polyestherolen und festem PolyTHF in Mischung mit den Diaminen abgesenkt, so dass diese Substanzen bei üblichen Verarbeitungstemperaturen von 20 bis 60 °C meist flüssig vorliegen und dadurch viel leichter verarbeitet werden können.

Im Folgenden soll die Erfindung anhand von Beispielen verdeutlicht werden.

### Verwendete Einsatzstoffe

Isocyanate
- Isocyanat 1:: MDI-Diphenylmethandiisocyanat mit einem Gehalt des 4,4'-Isomers von 98,6 Gewichts-%
- Isocyanat 2:: Diphenylmethandiisocyanat mit 49,0%-Gewicht 4,4'-Isomer, 48,6%-Gewicht 2,4'-Isomer und 2,4%-Gewicht 2,2'-Isomer
- Isocyanat 3:: 4,4'-Diphenylmethandiisocyanat mit ca. 25 Gew.-% Carbodiimid modifiziertem 4,4'-MDI

Polyole
- Polyol 1:: Polytetrahydrofuran, OHZ = 56 mg KOH /g, Funktionalität = 2
- Polyol 2:: Polyesteralkohol aus Adipinsäure, 1,4-Butandiol und Ethylenglykol, OHZ = 56 mg KOH/g, Funktionalität = 2
- Polyol 3:: Polyesteralkohol aus Adipinsäure und Ethylenglykol, OHZ = 56 mg KOH/g, Funktionalität = 2
- Polyol 4:: Polyesteralkohol aus Adipinsäure und Ethylenglykol, Diethylenglycol und Glycerin, OHZ = 60 mg KOH/g, Funktionalität = 2,6

Vernetzer
- Vernetzer 1:: RC-Crosslinker 1604 (3,5-Diamino-4-chloroisobutylbenzoat der Fa. Rheinchemie, Rheinau), Schmelzpunkt 88 °C
- Vernetzer 2:: MCDEA (4,4'-Diamino-2,2'-dichloro-5,5'-diethyldiphenylmethan), Schmelzpunkt 89 °C
- Vernetzer 3:: Versalink® 740M der Fa. Air Products (Trimethylenglykol-di-p-aminobenzoat), Schmelzpunkt 125 °C

Katalysator

TEDA: Tetraethylendiamin

Die Schmelzpunkte wurden nach der Methode nach Tottoli an einem BÜCHI Meltingpoint B-540 mit einer Heizrate von 0,5 °C pro Minute gemessen.

### Beispiel 1: Herstellung von MDI-basierten Esterprepolymeren

Zunächst wurde durch Reaktion von Isocyanat und Polyolen Prepolymere hergestellt. Dazu wurde eine entsprechende Menge an Isocyanaten unter Stickstoff vorgelegt und auf eine Temperatur von 60°C aufgeheizt. Bei einer Temperatur von 60°C wurden die entsprechenden Polyole zu dieser Mischung langsam zugegeben und alsdann auf eine Temperatur von 80°C aufgeheizt und für 2 Stunden bei dieser Temperatur gerührt. Nach der Reaktion wurden die Prepolymere auf Raumtemperatur abgekühlt und den NCO-Gehalt und die Viskositäten bei 60°C bestimmt, siehe Tabelle 1.

**Tabelle 1: Prepolymere für die Herstellung der erhaltenen Elastomere**

| | B1 | B2 | B3 | B4 | B5 | B6 |
|---|---|---|---|---|---|---|
| Isocyanat 1 | - | 54 | - | 51 | - | - |
| Isocyanat 2 | 23 | - | 59 | - | 51 | 50 |
| Isocyanat 3 | - | 6 | - | 4 | 4 | 4 |
| Polyol 1 | 77 | 40 | 41 | - | - | - |
| Polyol 2 | - | - | - | - | - | 29 |
| Polyol 3 | - | - | - | 45 | 45 | - |
| Polyol 4 | - | - | - | - | - | 10 |
| Butyrolacton | - | - | - | - | - | 7 |
| NCO-Gehalt (%) | 4,6 | 18,0 | 18,0 | 16,3 | 16,3 | 16,1 |
| Visko 60°C (mPa.s) | 6450 | 400 | 620 | 380 | 960 | 840 |

### Beispiel 2: Herstellung der Aminlösungen

In einen Rührkolben wird eine Mischung von den entsprechenden Polyetherolen oder Polyesterolen und Amin aufgewärmt und bis zur vollständige Lösung des Feststoffes gerührt. Tabelle 2 gibt Auskunft über die Zusammensetzung, und Lagerstabilität der hergestellten Lösungen.

**Tabelle 2: Zusammensetzung, Herstellung und Stabilität der Aminlösungen**

| | A1 | A2 | A3 | A4 |
|---|---|---|---|---|
| Polyol 1 | 70 | 70 | | - |
| Polyol 2 | - | - | - | 80 |
| Polyol 3 | - | - | 70 | - |
| Vernetzer 1 | 30 | - | 30 | - |
| Vernetzer 2 | - | 30 | - | - |
| Vernetzer 3 | - | - | - | 20 |
| Vorbereitung | 80°C, 1 Std. | 80°C, 1 Std. | 80°C, 1 Std. | 100°C, 1 Std. |
| Homogene Lösung bei RT | > 6 Monate | 2 Monate | > 6 Monate | 3 Wochen |

### Beispiel 3: Herstellung erfindungsgemäßer Gießelastomere aus den Prepolymeren 1,4-Butandiol

Exemplarische Herstellvorschrift zur Herstellung von Gießelastomeren am Beispiel des Gießelastomeren G1 bzw. G2

Zur Herstellung der Gießelastomere V1 bis G9 wurden die Einsatzstoffe gemäß der Tabellen 3 bzw. 4 unter Verwendung einer Niederdruckmaschine bei der angegebenen Temperatur und den angegebenen Massenverhältnissen vermischt. Das reagierende Material wurde bei einer Formtemperatur von 90°C (V1 Formtemperatur = 110 °C) vergossen und anschließend für 16 Std. bei 100°C geheizt. Zur Bestimmung der Messwerte für die mechanischen Eigenschaften wurde gemäß der folgenden Normen vorgegangen.

| Eigenschaft | Dimension | DIN-Norm |
|---|---|---|
| Härte | Shore | 53505 |
| Zugfestigkeit | MPa | 53504 |
| Dehnung | % | 53504 |
| Weiterreißwiderstand | kN/m | 34-1, B (b) |
| Abrieb | mm³ | 4649 |
| Dichte | g/mm³ | 1183 |
| Druckverformungsrest | % | 815 |
| Rückprallelastizität | % | 53512 |

**Tabelle 3: Zusammensetzung, Herstellung und Eigenschaften der erfindungsgemäßen Gießelastomeren (Polyether)**

| | V1 | | G1 | | G2 | | G3 | | G4 | | G5 | |
|---|---|---|---|---|---|---|---|---|---|---|---|---|
| Prepolymer B1 | 100 | | - | | - | | - | | - | | - | |
| Prepolymer B2 | - | | - | | 53,9 | | - | | - | | - | |
| Prepolymer B3 | - | | 53,9 | | - | | 38,9 | | 31,6 | | 39,8 | |
| Polyol 1 | - | | 42,5 | | 42,5 | | 72,0 | | 76,0 | | 49,0 | |
| Vernetzer 1 | 12,6 | | - | | - | | - | | - | | - | |
| A1 | - | | 57,5 | | 57,5 | | 28,0 | | - | | - | |
| A2 | - | | - | | - | | - | | 24,0 | | 51,0 | |
| TEDA | - | | 0,05 | | 0,05 | | 0,05 | | 0,05 | | 0,05 | |
| Komponenten Temp. | 110°C* | | 50°C | | 50°C | | 50°C | | 50°C | | 50°C | |
| Form Temp. | 110°C | | 90°C | | 90°C | | 90°C | | 90°C | | 90°C | |
| Kennzahl | 103 | | 103 | | 103 | | 103 | | 103 | | 103 | |
| Gießzeit | 200s | | 180s | | 85s | | 270s | | 70s | | 40s | |
| Entformungszeit | 15 min | | 15 min | | 10 min | | 10 min | | 5 min | | 8 min | |
| * Prepolymer B1 bei 80°C | | | | | | | | | | | | |

| Mechanische Eigenschaften | | | | | | | | | | | | |
|---|---|---|---|---|---|---|---|---|---|---|---|---|
| | | E1 | | G1 | | G2 | | G3 | | G4 | | G5 |
| Härte (Shore A) | | 90 | | 86 | | 90 | | 73 | | 70 | | 80 |
| Härte (Shore D) | | 40 | | 36 | | 41 | | 26 | | - | | 32 |
| Dichte (g/cm³) | | 1,079 | | 1,077 | | 1,083 | | 1,054 | | 1,041 | | 1,057 |
| Zugfestigkeit (MPa) | | 48 | | 53 | | 29 | | 38 | | 35 | | 39 |
| Dehnung (%) | | 470 | | 620 | | 520 | | 700 | | 660 | | 670 |
| Weiterreißwiderstand (kN/m) | | 33 | | 53 | | 44 | | 32 | | 25 | | 47 |
| Abrieb (mm³) | | 52 | | 44 | | 49 | | 22 | | 31 | | 35 |
| Druckverformungsrest (%) | | 34 | | 32 | | 33 | | 21 | | 14 | | 30 |
| Rückprallelastizität (%) | | 54 | | 54 | | - | | 60 | | - | | 63 |

**Tabelle 4: Zusammensetzung, Herstellung und Eigenschaften der erfindungsgemäßen Gießelastomeren (Polyester)**

| | G6 | G7 | G8 | G9 |
|---|---|---|---|---|
| Prepolymer B4 | 56,4 | - | - | - |
| Prepolymer B5 | - | 56,4 | - | - |
| Prepolymer B6 | - | - | 40,6 | 47,9 |
| Polyol 2 | - | - | 51,0 | 25,0 |
| Polyol 3 | 48,5 | 48,5 | - | - |
| A3 | 51,5 | 51,5 | - | - |
| A4 | - | - | 49,0 | 75,0 |
| TEDA | 0,05 | 0,05 | 0,05 | 0,05 |
| Form Temp. | 90°C | 90°C | 90°C | 90°C |
| Kennzahl | 103 | 103 | 103 | 103 |
| Gießzeit | 90s | 150s | 500s | 450s |
| Entformungszeit | 15 min | 15 min | 15 min | 15 min |
| | | | | |

| Mechanische Eigenschaften | | | | |
|---|---|---|---|---|
| | G6 | G7 | G8 | G9 |
| Härte (Shore A) | 87 | 89 | 76 | 85 |
| Härte (Shore D) | 39 | 40 | - | 33 |
| Dichte (g/cm³) | 1,244 | 1,245 | 1,221 | 1,230 |
| Zugfestigkeit (MPa) | 45 | 56 | 53 | 45 |
| Dehnung (%) | 690 | 650 | 670 | 670 |
| Weiterreißwiderstand (kN/m) | 69 | 73 | 34 | 51 |
| Abrieb (mm³) | 50 | 65 | 50 | 74 |
| Druckverformungsrest (%) | 31 | 23 | 14 | 38 |

Bei den oben angegebenen Beispielen handelt es sich bei den Gießelastomeren nach V1 und G1 bis G6 um Gießelastomere auf Basis von Polyethern, während die Gießelastomere nach G7 bis G9 Systeme auf Basis von Polyestern zeigen. V1 zeigt ein Gießelastomer, das gemäß einem üblichen Verfahren ausgehend von einem Prepolymer mit einem Isocyanatgehalt von 4,6% im Heißgießverfahren erhalten wurde. Dagegen zeigt das gemäß erfindungsgemäßem Verfahren hergestellte Gießelastomere G1 bei ansonsten im Wesentlichen identischer Zusammensetzung gegenüber V1 deutlich bessere mechanische Eigenschaften, insbesondere bei Zugfestigkeit, Dehnung, Weiterreißfestigkeit und vor allem Abrieb.

Dabei kann die Verarbeitung der erfindungsgemäßen Beispiele bei deutlich geringeren Temperaturen als im Vergleichsbeispiel erfolgen.

Weiter zeigen die Beispiele, G1 und G3, G4 und G5 sowie G8 und G9, dass durch Variation des Polyol- und Vernetzergehalts bei Einsatz des identischen Prepolymers unterschiedliche

Härten erhalten werden können. Dabei zeigt insbesondere das weichere Elastomer sehr gute Abriebwerte. Schließlich zeigen Gießelastomere, die auf Basis von Prepolymeren, ausgehend von 50% 2,4'-MDI und 50% 4,4'-MDI gemäß G1, G3 bis G5 und G7 bis G9 hergestellt wurden, längere Gießzeiten und verbesserte mechanische Eigenschaften gegenüber Gießelastomeren, die ausgehend von im Wesentlichem reinem 4,4'-MDI hergestellt wurden (G2 und G6).

## Patentansprüche

1. Polyurethangießharzsystem, enthaltend
a) Mindestens ein Isocyanatprepolymeren mit einem NCO-Gehalt von mindestens 7 Gew.-%, erhältlich durch Umsetzung von Isocyanat (a1), enthaltend 2,4' MDI und 4,4'-MDI, und Polyol 1 (a2), und
b) eine Stoffmischung (b), enthaltend mindestens ein Polyol 2 (b1) und mindestens ein Diamin (b2), wobei der Schmelzpunkt des Diamins (b2) mindestens 80 °C beträgt sowie gegebenenfalls
c) weitere Polyole und gegebenenfalls
d) Hilfs- und Zusatzstoffen.

2. Polyurethangießharzsystem nach Anspruch 1, **dadurch gekennzeichnet, dass** das Diamin (b2) mindestens eine aromatisch gebundene NH₂-Gruppe aufweisen.

3. Polyurethangießharzsystem nach Anspruch 2, **dadurch gekennzeichnet, dass** die Diamin (b2) mindestens einen elektronenziehenden Substituenten am Aminogruppe tragenden aromatischen System aufweist.

4. Polyurethangießharzsystem nach einem der Ansprüche 1 bis 3, **dadurch gekennzeichnet, dass** das Polyol (b2) ein Polyesterpolyol oder ein Polytetrahydrofuran ist und ein Molekulargewicht von 500 bis 4000 g/mol aufweist.

5. Polyurethangießharzsystem nach einem der Ansprüche 1 bis 3, **dadurch gekennzeichnet, dass** der Anteil an Diamin (b2), bezogen auf das Gesamtgewicht von Polyol 2 (b1) und Diamin (b2) 1 bis 50 Gew.-% beträgt.

6. Polyurethangießharzsystem, dach einem der Ansprüche 1 bis 5, **dadurch gekennzeichnet, dass** die Stoffmischung (b) des Weiteren oberflächenaktive Substanzen enthält.

7. Verfahren zur Herstellung von Polyurethangießharzen, bei dem man
a) einem Isocyanatprepolymere mit einem NCO-Gehalt von mindestens 7 Gew.-%, erhältlich durch Umsetzung von Isocyanat (a1), enthaltend 2,4' MDI und 4,4'-MDI, und Polyol 1 (a2), mit
b) eine Stoffmischung (b), enthaltend mindestens ein Polyol 2 (b1) und ein Diamin (b2), wobei der Schmelzpunkt des Diamins (b2) mindestens 80 °C beträgt, sowie gegebenenfalls
c) weitere Polyole und gegebenenfalls
d) Hilfs- und Zusatzstoffen
zu einer Reaktionsmischung vermischt und die Reaktionsmischung zum Polyurethangießharz ausreagieren lässt.
(gegebenenfalls Polyol und Polyol + Aminkomponente zur Einstellung der Härte)

8. Verfahren nach Anspruch 7, **dadurch gekennzeichnet, dass** die Komponenten (a), (b) und gegebenenfalls (c) bei 50 bis 90 °C vermischt werden.

9. Polyurethangießelastomer, erhältlich nach einem Verfahren gemäß Anspruch 7 oder Anspruch 8.
